Europäisches Patentamt

European Patent Office

Office européen des brevets

(11) Veröffentlichungsnummer: **0 051 272**
A2

(12) **EUROPÄISCHE PATENTANMELDUNG**

(21) Anmeldenummer: 81109126.3

(22) Anmeldetag: 28.10.81

(51) Int. Cl.³: **H 01 G 9/12**
**H 01 G 1/11**

(30) Priorität: 03.11.80 DE 3041391
28.09.81 DE 3138519

(43) Veröffentlichungstag der Anmeldung:
12.05.82 Patentblatt 82/19

(84) Benannte Vertragsstaaten:
FR GB IT NL

(71) Anmelder: Klaschka, Rudolf
Tannenweg 9
D-7896 Wutöschingen 3(DE)

(72) Erfinder: Klaschka, Rudolf
Tannenweg 9
D-7896 Wutöschingen 3(DE)

(74) Vertreter: Jaeger, Klaus Dr. et al,
JAEGER & PARTNER Patentanwälte Bergstrasse 48 1/2
D-8035 München-Gauting(DE)

(54) Kondensatorbechergehäuse, Verfahren zu seiner Herstellung und Vorrichtung zu seiner Herstellung.

(57) Kondensatorbechergehäuse mit einer schlitzartigen Zylindermantelwandschwächung als Sollberststelle zur Verhinderung einer Explosion bei Überlastung oder Überwärmung des in einem solchen Bechergehäuse eingeschlossenen Kondensators. Die vorzugsweise durch Stanzen angebrachte Wandschwächung weist ein von außen gesehen konkav durchgewölbtes Sohlenprofil auf, dessen tiefster Punkt, bezogen auf die Längsrichtung der Schwächung, im Mittelbereich der Schwächung liegt.

Bei dem Verfahren zur Herstellung des Kondensatorbechergehäuses aus einem fließfähigen Werkstoff, insbesondere aus Aluminium, mit einer gestanzten linearen schlitzartigen Wandschwächung als Sollberststelle wird das Gehäuse für den Stanzvorgang auf einen Haltedorn gezogen, der in seinem als Gegenstempel zur Stanzschneide dienenden Oberflächenbereich plan ausgebildet ist und in diesem Oberflächenbereich nicht an der Innenwand des aufgezogenen Gehäuses anliegt, während diese Innenwand in allen übrigen Oberflächenbereichen flächenbündig und paßgenau am Haltedorn anliegt.

FIG.1

# JAEGER, GRAMS & PONTANI

0051272

PATENTANWÄLTE

| DIPL.CHEM. DR. KLAUS JAEGER | DIPL.-ING. KLAUS D. GRAMS | DR.-ING. HANS H. PONTANI |
|---|---|---|
| 8035 GAUTING · BERGSTR. 48½ | 8031 STOCKDORF · KREUZWEG 34 | 8752 KLEINOSTHEIM · HIRSCHPFAD 3 |

KLA-2-EP

Rudolf Klaschka

Tannenweg 9, D-7896 Wutöschingen 3

---

Kondensatorbechergehäuse, Verfahren zu seiner Herstellung und Vorrichtung zu seiner Herstellung

---

B e s c h r e i b u n g

Die Erfindung betrifft ein Kondensatorbechergehäuse der im Oberbegriff des Patentanspruchs 1 genannten Art sowie ein Verfahren zu seiner Herstellung und eine Vorrichtung zur Durchführung dieses Verfahrens.

Kondensatoren, insbesondere des mittleren Leistungsbereiches, bestehen üblicherweise aus einem kapazitiven Element, das von einer Flüssigkeit umgeben ist und einem hermetisch verschlossenen Gehäuse, in dem das kapazitive Element und die Flüssigkeit eingeschlossen sind. Die im Kondensatorgehäuse eingeschlossene Flüssigkeit dient je nach Kondensatortyp als Elektrolyt oder Isolator. Das Gehäuse hat meist die Form

TELEPHON: (089) 8502030; 8574080; (06027) 8825 · TELEX: 521777 isar d

eines einseitig geschlossenen und einseitig offenen zylindrischen Bechers, dessen offene Stirnseite nach Einbringen des kapazitiven Elementes und der Flüssigkeit mit einer Abschlußscheibe verschlossen wird. Auch kann das Kondensatorgehäuse aus einem beidseitig offenen zylindrischen Rohrabschnitt bestehen, das nach dem Einbringen des kapazitiven Elementes und seiner Formierung beidseitig mit Abschlußscheiben oder Stopfen verschlossen wird. Im Rahmen der Erfindung werden beide Gehäusetypen unter der Bezeichnung "Kondensatorbechergehäuse" zusammengefaßt.

Kondensatorbechergehäuse der genannten Art werden überwiegend aus Aluminium hergestellt. Daneben werden auch Becher aus anderem fließfähigem Werkstoff, insbesondere fließfähigen Kunststoffen, verwendet.

Bei verschlossenen Becherkondensatoren oder Rohrkondensatoren der genannten Art besteht bei elektrischer Überlastung und/oder übergroßer äußerer Wärmeeinwirkung prinzipiell Explosionsgefahr aufgrund des über der eingeschlossenen Flüssigkeit aufgebauten Dampfdruckes. Insbesondere können bei     Überlastung des Kondensators die Abschlußdeckel mit großer Wucht geschoßartig aus ihren Verankerungen gerissen werden und dadurch erhebliche Schäden verursachen. Kondensatoren der genannten Art müssen daher mit Überdrucksicherungen ausgerüstet sein. Solche dem Überlastungsschutz dienenden Überdrucksicherungen sind in großer Vielzahl bekannt. Sie arbeiten entweder reversibel nach dem Rückschlagprinzip oder irreversibel nach dem Berstprinzip. Nach dem Berstprinzip arbeitende Überdrucksicherungen sind in der Regel in Form von gummielastischen Berstmembranen und/oder Schwächungen und/oder Ausnehmungen als konstruktive Elemente des Abschlußdeckels der Bechergehäuse ausgebildet.

Die Berstventile der genannten Art weisen häufig den
Nachteil auf, nicht zuverlässig reproduzierbar bei einem
bestimmten vorgegebenen Berstdruck zu öffnen. Zudem öffnen
die bekannten Berstvorrichtungen relativ schlagartig und
heftig, da sie durch Platzen abrupt und nicht durch Reißen
allmählich öffnen. Die Praxis der letzten Jahre weist zahlreiche Unfälle auf, bei denen Becherkondensatoren trotz der
Ausbildung von Berstvorrichtungen an den Abdeckscheiben
explodiert sind.

Ein weiterer Nachteil der bekannten Berstsicherungen liegt
darin, daß sie in der Herstellung kostenaufwendige Konstruktionselemente sind.  Dabei ist zu berücksichtigen, daß
Kondensatoren Produkte der Massenfertigung sind, die in
vielen hunderttausenden Stück pro Monat gefertigt werden.
Im Rahmen einer solchen Fertigung ist es durchaus von entscheidender Bedeutung, ob sich die Herstellungskosten des

Kondensators durch die Fertigung einer Überdrucksicherung
um beispielsweise 0,1 % oder nur um 0,01 % verteuert.

Mit dem Ziel der Verbesserung der Berstcharakteristik
und der gleichzeitigen Kostensenkung sind daher aus der
Praxis Versuche bekannt geworden, durch Wandschwächungen
in den Bechergehäusen selbst als Überdrucksicherungen wirkende
Sollberststellen vorzusehen. Diese Versuche haben jedoch
nicht zum Erfolg geführt. Entweder fielen die angebrachten
Wandschwächungen so weitgehend aus, daß das Gehäuse bereits
bei einem Druck von nur wenigen Bar undicht wurde, oder die
Schwächungen waren nur so flach angebracht, daß die Explosion
des Kondensators bei Überlastung nicht verhindert werden
konnte, also nicht das Aufreißen des Bechers an der vorgesehenen Sollberststelle erfolgte.

Schließlich ist in Weiterentwicklung der durch Gehäusewandschwächung angestrebten Überdrucksicherung auch versucht
worden, die Wand eher etwas stärker als etwas zu wenig zu
schwächen und die dadurch in Kauf genommene Undichtheit
des Gehäuses durch einen über die Schwachstelle gezogenen
oder geschrumpften Ventilmantelschlauch hintanzuhalten.
Da die als Ventilmantel verwendbaren Werkstoffe jedoch nur
eine geringe Permeationsfestigkeit gegenüber Gasen und
Dämpfen aufweisen, haben auch solche zusätzlichen Ventilmaßnahmen das durch Undichtheit des Gehäuses verursachte
vorzeitige Austrocknen und Ausfallen der Kondensatoren
nicht verhindern können.

Angesichts dieses Standes der Technik liegt der Erfindung
die Aufgabe zugrunde, ein Kondensatorbechergehäuse der eingangs genannten Art mit einer Wandschwächung als Sollberststelle zu schaffen, das bis zu einem genau einstellbaren
und vorgebbaren Berstdruck absolut dicht ist, auch im Rahmen
der Massenfertigung, insbesondere der automatisierten
Massenfertigung hergestellt und eingesetzt werden kann,
beim Überschreiten des Berstdruckes durch sanftes Einreißen zuverlässig öffnet und zudem so zuverlässig und preiswert herstellbar ist, daß es den Anforderungen
an einen Massenartikel standhält.

Zur Lösung dieser Aufgabe wird ein Kondensatorbechergehäuse
der eingangs genannten Art geschaffen, das erfindungsgemäß
die im kennzeichnenden Teil des Patentanspruchs 1 genannten
Merkmale aufweist.

Erfindungswesentliches Merkmal des Kondensatorbechergehäuses
mit der als Sollberststelle ausgebildeten schlitzartigen
Wandschwächung ist also, daß die Schlitzsohle nicht über
ihre gesamte Länge geradlinig und parallel zu den Oberflächen
der geschwächten Wand verläuft, sondern in der Art stetig
oder unstetig gekrümmt verläuft, daß, bezogen auf die Länge
der Schwächung, der mittlere Bereich tiefer liegt als die
beiden seitlichen Endabschnitte des die Wand schwächenden
Schlitzes. Die verbleibende Wandstärke ist also im Mittelabschnitt der schlitzartigen Wandschwächung deutlich kleiner
als an den Randabschnitten. Dabei kann das Schlitzprofil in
diesem Mittelabschnitt durchaus auch geradlinig und parallel
zu den Wandoberflächen verlaufen, solange die zu beiden Seiten
dieses Mittelabschnittes angrenzenden Seitenabschnitte zu
den Enden der schlitzartigen Schwächung hin jeweils ansteigend im Sinne einer zunehmenden verbleibenden Wandstärke
ausgebildet sind. Je nach den gegebenen Materialverhältnissen
und Wandstärkeverhältnissen wird auch die Durchwölbung des
Schlitzprofils unterschiedlich stark auszubilden sein. Als
Richtwert sei ein Wert in der Größenordnung von 0,5 bis
1,5 % für das Verhältnis der Scheiteltiefe zur Länge der
schlitzartigen Wandschwächung bei Verwendung von Aluminium
als Wandmaterial genannt. Ein solches Schlitzprofil ist
problemlos auch im Rahmen der Massenfertigung stanzbar und
läßt sich mit nur geringer Toleranz für ganz bestimmte
vorgegebene Öffnungsdrücke auslegen, und zwar inbesondere auch für relativ niedrige Öffnungsdrücke, ohne daß dabei
durch Streuung bei der Herstellung bereits undichte Gehäuse
in der Fertigung anfallen.

Je nach Werkstoffverhältnissen können die Enden der Wandschwächung entweder kurze und zumindest im wesentlichen
geradlinige radiale Abschnitte aufweisen oder kann die
Schlitzprofilkrümmung kontinuierlich auf die äußere Wandfläche auslaufen. Die Richtungsangabe "radial" geht dabei
davon aus, daß die Wandschwächung in der Zylindermantelwand eines im wesentlichen zylindrischen Bechergehäuses
angebracht ist und bezieht sich auf die Geometrie eines
solchen zylindrischen Bechergehäuses.

Das Profil des Schlitzes ist nach einer Ausgestaltung der
Erfindung vorzugsweise zumindest im wesentlich elliptisch
gekrümmt, wobei der Scheitel der elliptischen Krümmung,
bezogen auf die Länge des Schlitzes, in der Mitte des
Schlitzes liegt. Dieses Grundprofil kann dahingehend abgewandelt werden, daß das im wesentlichen elliptische
Profil im Scheitelbereich geradlinig und parallel zu den
Wandoberflächen ausgerichtet ausgebildet ist. Die an diesen
mittleren geradlinigen Abschnitt angrenzenden seitlichen Endabschnitte des Schlitzprofils können entweder gekrümmt, vorzugsweise im wesentlichen elliptisch gekrümmt, oder gegebenenfalls auch geradlinig ausgebildet sein, so daß sich das Profil
im zuletzt genannten Fall aus drei geradlinigen, gegeneinander
gewinkelten Abschnitten mit insgesamt angenähert trapezförmiger
Gestalt zusammensetzt.

Ein besonders günstiges Berstverhalten mit erwünschter Reißcharakteristik wird erhalten, wenn das Schlitzprofil quer
zur Längsrichtung des Schlitzes zumindest im wesentlichen
trapezförmig ausgebildet ist. Der sich von der Schlitzsohle
zum Schlitzkragen öffnende Öffnungswinkel des Trapezes liegt

dabei vorzugsweise in der Größenordnung von ungefähr 5° bis 20° und beträgt insbesondere vorzugsweise ca. 10°. Entscheidend ist dabei, daß die Schlitzsohle nicht spitzwinklig, sondern vorzugsweise abgeflacht, die kleinere Basis des Querschnittstrapezes bildend, ausgebildet ist. Vorzugsweise beträgt die Breite der Sohle des im Querschnitt trapezförmigen Schlitzes etwa 10 % bis 30 %, insbesondere vorzugsweise ca. 20 % der Breite des Schlitzes an seiner zur Gehäuseaußenwandfläche definierten oberen Breite.

Die Wandschwächung im Kondensatorbechergehäuse der Erfindung kann prinzipiell auf verschiedene Art hergestellt werden. Vorzugsweise wird sie im Hinblick auf die Herstellungskosten durch Stanzen mit einer entsprechend konvex geformten Schneide hergestellt. Das Bechergehäuse ist für diesen Stanzvorgang auf einen paßgenau anliegenden Haltedorn aufgezogen.

Durch das Stanzen des Schwächungsschlitzes wird das durch die Stanzschneide verdrängte Material wallartig oder gratartig zu beiden Seiten des durch den Stanzvorgang erzeugten Schlitzes aufgeworfen. Dieser Wall oder Grat hat bei Gehäusedurchmessern in der Größenordnung von bis zu ungefähr 6 oder 8 cm eine Höhe von durchscnittlich ungefähr 0,1 mm und nur in seltenen Ausnahmefällen eine Höhe von bis zu maximal 0,3 mm, bezogen auf die angrenzende äußere Oberfläche bzw. Mantelfläche des Gehäuses. Selbst eine solche durchschnittliche Grathöhe von 0,1 mm kann sich jedoch störend auswirken, wenn auf dem automatischen Fertigungsstraßen für die Kondensatoren, auf denen das gestanzte Bechergehäuse eingesetzt werden soll, oder wenn bei der Verwendung des fertiggestellten Kondensators auf automatischen Fertigungsstraßen Spannzangenhalterungen eingesetzt werden.

Es wäre naheliegend, diesen Stanzgrat nach dem Stanzen in einer zweiten Bearbeitungsstufe durch Abstechen oder Ab- ·schleifen zu entfernen. Da die in Rede stehenden Kondensatorgehäuse jedoch Artikel der Massenfertigung sind, würde ein solcher zweiter Bearbeitungsvorgang die Herstellung für die Bechergehäuse untragbar verteuern.

Gemäß einer weiteren Ausbildung der Erfindung ist daher vorgesehen, daß das zu stanzende Gehäuse auf einen profilkomplementären paßgenauen Haltedorn aufgezogen wird, der in dem der Stanzschneide gegenüberliegenden und im eigentlichen Sinne als Gegenstempel zur Schneide wirkenden Oberflächenbereich plan ausgebildet ist und bei dem dieser plane, als Gegenstempelfläche wirkende und dienende Oberflächenbereich vor der Durchführung des Stanzvorganges nicht an der Innenwand des aufgezogenen Gehäuses anliegt, während in allen anderen Bereichen die Innenwand des auf den Haltedorn aufgezogenen Gehäuses paßgenau und flächenbündig auf dem Außenmantel des Haltedorns aufliegt. Durch diese Ausbildung des Haltedorns wird bewirkt, daß beim Absenken der Stanzschneide die Gehäusewand zunächst nicht unterstützt ist, wenn die Schneide auf die äußere Oberfläche der Gehäusewand aufsetzt. Beim weiteren Absenken der Stanzschneide findet daher zunächst kein Schneidstanzen unter Fließen des Werkstoffs der Gehäusewand, sondern eine Biegeverformung der Gehäusewand statt. Diese Biegeverformung erfolgt solange, bis die Innenwand des Gehäuses in dem unter der Stanzschneide liegenden Bereich auf die plan abgeflachte Oberfläche des Haltedorns niedergedrückt ist. Beim weiteren Absenken der Stanzschneide tritt dann das Stanzen des Schlitzes, also das Schneidstanzen, unter Fließen des Werkstoffs der Gehäusewand ein. Dabei werden in unvermeidbarer Weise die Stanzgrate zu beiden Seiten des gestanzten Schlitzes aufgeworfen. Durch die Verformung der Gehäusewand vor dem Stanzen wird nun jedoch erreicht, daß diese aufgeworfenen Stanzgrate nun nicht mehr über die Außenbegrenzung des Sollquerschnitts des Gehäuses vorstehen, sondern innerhalb dieser Begrenzung liegen. Die Abflachung des Haltedorns wird dabei vorzugsweise nur so flach gewählt, daß die höchsten Erhebungen des Stanzgrates gerade innerhalb oder höchstens auf der Sollbegrenzung der Querschnittsfläche liegen. Wenn also Vorversuche gezeigt haben, daß die mittlere Stanzgrathöhe 0,1 mm beträgt, so wird auch die plane Abflachung des Haltedorns um 0,1 mm oder nur wenig darüber betragen. Für die Herstellung zylindrischer Kondensatorgehäuse aus Aluminium mit Durchmessern in der Größenordnung von bis zu rd. 10 cm liegt die Oberfläche der planen Abflachung des im übrigen zylindrischen Haltedorns vorzugsweise 0,05 bis 0,5 mm unter dem Scheitel des gedachten Verlaufs der Zylindermantelfläche des Haltedorns.

Die plane Abflachung des Haltedorns erstreckt sich vorzugsweise in ihrer Längsrichtung parallel zur Längsachse des Haltedorns. Insbesondere sind vorzugsweise die Längsachse der Abflachung, die Stanzschneide und die Längsachse des Haltedorns parallel zueinander ausgerichtet, so daß also die in das Gehäuse gestanzte schlitzartige Wandschwächung parallel zur Längsachse des Kondensatorgehäuses verläuft. Dabei kann sich der plan abgeflachte Oberflächenbereich sowohl über die gesamte axiale Länge des Haltedorns erstrecken als auch in seiner axialen Länge nur auf den Stanzbereich beschränkt sein.

Die Erfindung ist im folgenden an Hand von Ausführungsbeispielen in Verbindung mit den Zeichnungen näher erläutert. Es zeigen:

Fig. 1    im Axialschnitt und in nicht maßstäblicher
          schematischer Darstellung ein Kondensator-
          bechergehäuse mit schlitzartiger Soll-
          berststelle;

Fig. 2    in vergrößerter Darstellung einen Schnitt
          nach II-II in Fig. 1;

Fig. 3    im Querschnitt und in schematischer nichtmaßstäblicher Teildarstellung das auf den Haltedorn aufgezogene Gehäuse und die
          Stanzschneide vor Beginn des Stanzvorganges;

Fig. 4    die in Fig. 3 gezeigte Teildarstellung nach
          Abschluß des Stanzvorganges;

Fig. 5    in perspektivischer, schematischer und
          nichtmaßstäblicher Darstellung ein erstes
          Ausführungsbeispiel für den Haltedorn; und

Fig. 6    in schematischer nichtmaßstäblicher Darstellung und im Axialschnitt ein zweites Ausführungsbeispiel des Haltedorns.

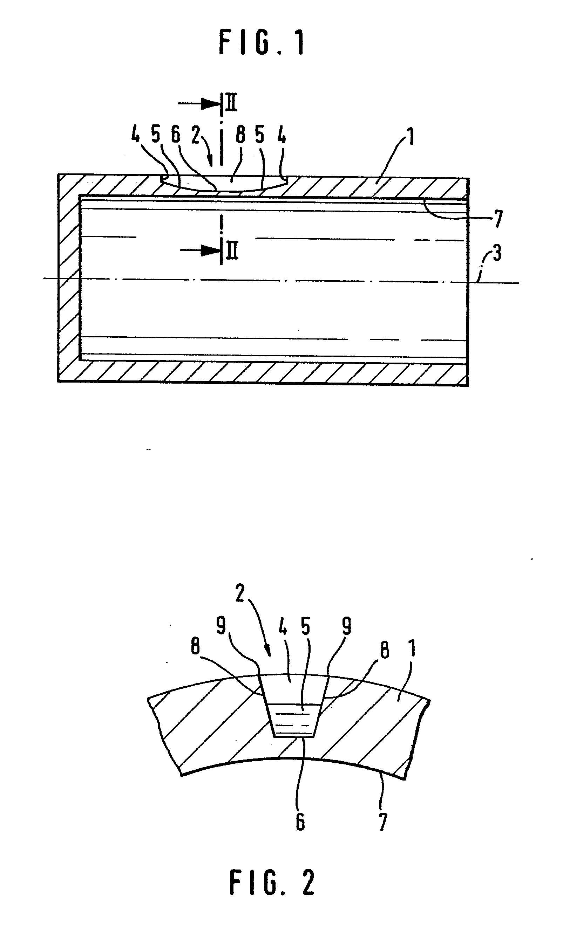

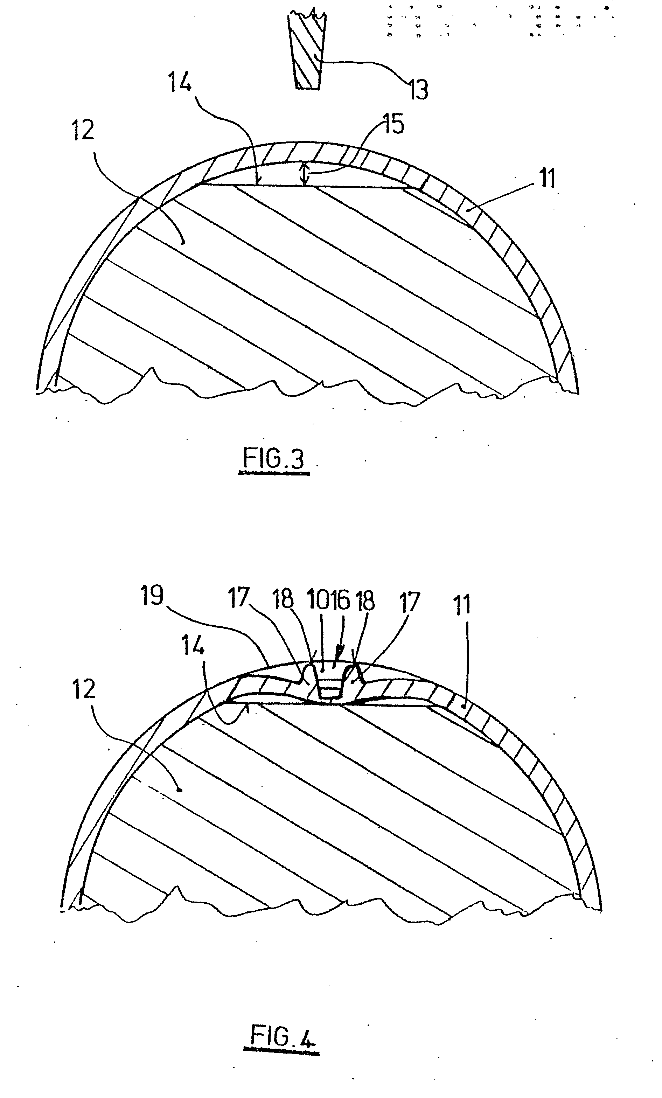

Das im Axialschnitt in schematischer und nicht maßstäblicher
Darstellung in Fig. 1 veranschaulichte Kondensatorbechergehäuse 1 besteht aus Aluminium und weist eine kreiszylindrische
Form auf. In der Zylindermantelfläche des Bechergehäuses 1
ist eine geradlinig schlitzartige Wandschwächung 2 eingestanzt, die zumindest im wesentlichen parallel zur Mittelachse 3 des Bechergehäuses 1 verläuft. Der Schlitz hat eine Länge von ca. 15 mm. Das in der Fig. 3 dargestellte Längsprofil des Schlitzes setzt sich aus drei Elementen zusammen: (a) Zwei zumindest im wesentlichen radial zur Mittelachse 3 stehenden Randabschnitte 4 an den Schlitzenden, (b) angrenzend an diese zwei symmetrische und im wesentlichen elliptisch gekrümmte Abschnitte 5, die auf der Sohle des Schlitzes (c) in einen geradlinigen Abschnitt 6 übergehen, der zumindest im wesentlichen parallel zur Innenwand 7 des Bechergehäuses 1 verläuft. Die Länge des geradlinigen Abschnitts 6 des Längsprofils des Schlitzes 2 beträgt ca. 3 mm, liegt also bei rund 20 % der gesamten Länge des Schlitzes zwischen den radial stehenden Profilabschnitten 4. Die zwischen dem geradlinigen Profilabschnitt 6 und der Innenwandfläche 7 des Bechergehäuses 1 stehenbleibende Wandstärke bestimmt maßgeblich den Berstdruck, bei dem das Bechergehäuse 1 unter Druck im Bereich des als Sollberststelle wirkenden Schlitzes 2 aufreißt.

Der in Fig. 1 gezeigte Schlitz 2 ist in der Fig. 2 im Querschnitt nach II-II nach Fig. 1 vergrößert, schematisch und ebenfalls in nicht maßstäblicher Darstellung gezeigt. Im Querschnitt weist der die Wand des Bechergehäuses 1 schwächende Schlitz 2 die Form eines Trapezes auf. Die beiden Seitenwände 8 des Schlitzes laufen also nicht so zusammen, daß sie gemeinsam einen spitzen Winkel bilden, sondern sind durch einen flachen Abschnitt voneinander getrennt, der die kleinere Basis des sich als Querschnittsprofil des Schlitzes 2 ergebenden Trapezes bildet. Die Breite der Sohle des Schlitzes trägt vorzugsweise ungefähr 20 % der oberen Öffnungsbreite des Schlitzes 2 zwischen den Kanten 9,9. Die beiden Seitenwände 8 des Schlitzes 2 schließen vorzugsweise einen Winkel in der Größenordnung von ca. 10° ein.

In der Fig. 3 ist im Querschnitt und in nichtmaßstäblicher, der Deutlichkeit halber übertriebener Darstellung ein Kondensatorgehäuse 11 gezeigt, das paßgenau auf einen Haltedorn 12 aufgezogen ist. Die Darstellung der Fig. 3 zeigt die Stanzanordnung vor dem Absenken der Stanzschneide 13. In dem der Stanzschneide 13 gegenüberliegenden und im wesentlichen als Gegenstempel wirkenden Oberflächenbereich 14 ist der Haltedorn 12 plan abgeflacht. Die Innenwand des Gehäuses 11 liegt in diesem planen abgeflachten Oberflächenbereich 14 nicht am Haltedorn an, während die Innenwand des Gehäuses 11 in allen anderen Bereichen flächenbündig und paßgenau an der Außenwand des Haltedorns 12 anliegt.

Der Abstand 15 zwischen der planen Oberfläche 14 und dem Scheitel der zylindrischen Innenwandfläche des Gehäuses 11, entsprechend dem Scheitel des an dieser Stelle gedachten Verlaufs der zylindrischen Außenfläche des Haltedorns 12 beträgt je nach den Gegebenheiten des einzelnen Anwendungsfalles typischerweise 0,05 bis 0,5 mm, insbesondere 0,15 bis 0,25 mm.

Beim Absenken der Schneide 13 wird der nicht durch den Haltedorn 12 unterstützte Abschnitt des Gehäuses 11 zunächst durch Biegen soweit verformt, bis die innere Oberfläche des Gehäuses 11 auf der planen Oberfläche 14 des Haltedorns 12 aufliegt und dadurch vom Haltedorn 12 als Gegenstempel unterstützt wird. Beim weiteren Absenken der Schneide 13 tritt der den Schlitz stanzende Einschneidvorgang bzw. Stanzvorgang ein, bei dem eine Materialverdrängung durch Fließen stattfindet. Das durch Fließen von der Schneide 13 verdrängte Material wird dabei in der in Fig. 4 gezeigten Weise zu beiden Seiten des gestanzten Schlitzes 16 als Stanzgrat 17 aufgeworfen. Die Krone 18 des Stanzgrates 17 liegt durch die vorangegangene Verformung der Wand des Gehäuses 11 innerhalb der exakt zu wahrenden äußeren Querschnittsbegrenzungslinie 19 des Gehäuses, während sie bei Verwendung eines Haltedorns 12 ohne abgeflachten Oberflächenbereich 14 um die gesamte Aufwurfhöhe über diese Begrenzungslinie 19 vorspringen würde. Ein Bechergehäuse, das eine aus der Fig. 4 ersichtliche Konfiguration der gestanzten Wandschwächung aufweist, ist daher ohne Nacharbeitung der Weiterverarbeitung mit Spannzangenhalterungen zugänglich.

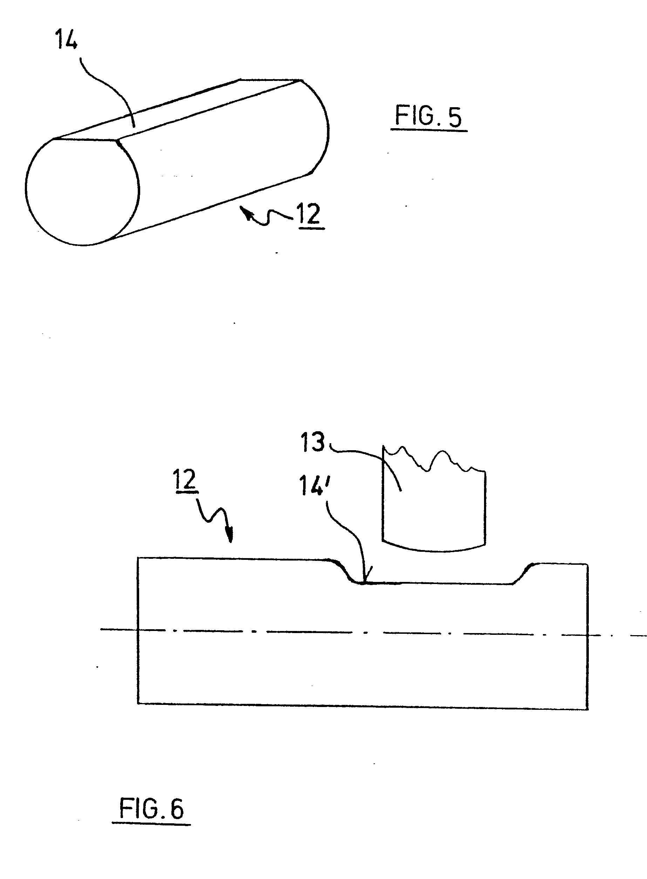

In axialer Richtung des Haltedorns 12 kann sich der abgeflachte Oberflächenbereich 14 in der aus Fig. 5 ersichtlichen Weise axial über die gesamte Länge des Haltedorns 12 erstrecken. Alternativ kann die axiale Länge der plan abgeflachten Oberfläche 14' jedoch auch auf einen Abschnitt begrenzt bleiben, der sich im wesentlichen nach der Länge der Stanzschneide 13 richtet und in der aus Fig. 6 ersichtlichen Weise zumindest geringfügig länger, bezogen auf die Längsrichtung des zu stanzenden Schlitzes, ist als die Schneide 13. Der in seiner axialen Länge begrenzte plan abgeflachte Oberflächenbereich 14' muß dabei zumindest um einen solchen Betrag länger als die Länge der Schneide 13 sein, daß die an den stirnseitigen Endbereichen aufgeworfenen Stanzgrate 10 (Fig. 4) vollständig mit abgesenkt werden. Eine entsprechende Dimensionierung der plan abgeflachten Oberfläche 14' ist für den Fachmann kein Problem.

Patentansprüche

1. Kondensatorbechergehäuse aus fließfähigem Werkstoff,
   insbesondere aus Aluminium, mit einer linearen
   schlitzartigen Wandschwächung als Sollberststelle,
   dadurch g e k e n n z e i c h n e t ,
   daß der die Gehäusewand (1) schwächende Schlitz (2),
   bezogen auf seine Länge, im Profil in seinem
   mittleren Abschnitt (6) tiefer als an seinen beiden
   Endabschnitten (4,5) ist.

2. Kondensatorbechergehäuse nach Anspruch 1,
   dadurch g e k e n n z e i c h n e t ,
   daß der die Gehäusewand (1) schwächende Schlitz (2)
   zumindest im wesentlichen ein elliptisches Profil
   aufweist, dessen Scheitel in der Mitte des Schlitzes,
   bezogen auf seine Länge, liegt.

3. Kondensatorbechergehäuse nach einem der Ansprüche 1 oder 2,
   dadurch g e k e n n z e i c h n e t ,
   daß das Schlitzprofil in seinem auf die Länge bezogenen
   mittleren Abschnitt (6) geradlinig ist und zumindest im
   wesentlichen parallel zur Innenwandfläche (7) des
   Bechergehäuses (1) verläuft.

4. Kondensatorbechergehäuse nach einem der Ansprüche 1 bis 3,
   dadurch g e k e n n z e i c h n e t ,
   daß das Schlitzprofil quer zur Längsrichtung des die
   Gehäusewand (1) schwächenden Schlitzes Trapezform hat
   (Fig. 2).

5. Kondensatorbechergehäuse nach einem der Ansprüche 1 bis 4,
   dadurch  g e k e n n z e i c h n e t ,
   daß der die Gehäusewand schwächende Schlitz (2) bei
   zylindrischer Ausbildung des Bechergehäuses (1) parallel
   zur Mittelachse (3) des Bechergehäuses in dessen
   Mantelwand angebracht ist.

6. Verfahren zur Herstellung einer schlitzartigen Wandschwächung
   als Sollberststelle in der Wand eines Kondesnatorbechergehäuses aus fließfähigem Werkstoff, insbesondere aus
   Aluminium,
   dadurch  g e k e n n z e i c h n e t ,
   daß das Gehäuse passgenau anliegend auf einen Haltedorn aufgezogen wird und die Gehäusewand dann von
   außen mit einer konvexen Schneide so gestanzt wird,
   daß die Gehäusewand auch am Scheitel der Schneide
   nicht durchtrennt wird.

7. Verfahren nach Anspruch 6,
   dadurch  g e k e n n z e i c h n e t ,
   daß das Gehäuse auf einen Haltedorn aufgezogen wird,
   der in seinem als Gegenstempel zur Schneide dienenden
   Oberflächenbereich plan ausgebildet ist und der in
   diesem planen Oberflächenbereich nicht an der Innenwand des aufgezogenen Gehäuses anliegt.

8. Verfahren nach Anspruch 7,
   dadurch  g e k e n n z e i c h n e t ,
   daß der Abstand von der planen Gegenstempeloberfläche
   zur Innenwand des Gehäuses nur Bruchteile eines Millimeters beträgt, insbesondere 0,05 bis 0,5 mm beträgt.

9. Vorrichtung zur Durchführung des Verfahrens nach einem der Ansprüche 7 oder 8 mit einer als Stanzstempel dienenden Schneide und einem als Gegenstempel dienenden Haltedorn,
   g e k e n n z e i c h n e t   durch
   einen zylindrischen Haltedorn (12), der in seinem als Gegenstempel wirkenden Oberflächenbereich (11) plan abgeflacht ist, wobei die plane Abflachung (14) nur Bruchteile eines Millimeters tief ist, insbesondere nur 0,05 bis 0,5 mm tief ist.

10. Vorrichtung nach Anspruch 9,
    dadurch   g e k e n n z e i c h n e t ,
    daß die Längsachse der Abflachung (14), die Schneide (13) und die Längsachse des Haltedorns (12) parallel zueinander ausgerichtet sind.

# FIG.1

# FIG. 2

FIG.3

FIG.4

14

FIG. 5

12

FIG.6

13

12

14'